# EUROPEAN PATENT APPLICATION

(11) **EP 4 636 709 A1**
(43) Date of publication of application: **22.10.2025**
(21) Application number: 25170907.7
(22) Date of filing: 16.04.2025
(51) Int. Cl.: G06V 10/82, G06V 20/64

(54) **METHOD FOR VERIFYING WHETHER THE DAMAGE PRESENT IN A FIRST CRASHED VEHICLE IS ALREADY PRESENT IN A PLURALITY OF CRASHED VEHICLES**

(30) Priority: 16.04.2024 IT 202400008635
(71) Applicant: Capolupo, Angelo, 75100 Matera (MT) (IT); Tortorelli, Giuseppe, 75100 Matera (MT) (IT); Fossati, Nicola, 25022 Borgo San Giacomo (BS) (IT)
(72) Inventor: Capolupo, Angelo, 75100 Matera (MT) (IT); Tortorelli, Giuseppe, 75100 Matera (MT) (IT); Fossati, Nicola, 25022 Borgo San Giacomo (BS) (IT)
(74) Representative: Ercolani, Simone Pietro

(57) **Abstract**

Method for verifying whether the damage (D) present in a first crashed vehicle (V) is already present in a plurality of crashed vehicles (V1, V2,...Vn), said method comprising the steps of:
a) capturing one or more digital images (V(I1), V(I2),...V(In)) of said first crashed vehicle (V) at said damage D;
b) analyzing said one or more captured digital images (V(I1),V(I2),... V(In)) to identify and classify, by means of a first neural network (R1), the mechanical spare part (PM) of said first vehicle (V) in which there is said at least one damage (D);
c) analyzing said one or more captured digital images (V(I1),V(I2),..V(In)) to identify and classify, by means of a second neural network (R2), the type of damage (DT) present in said first vehicle (V);
d) cropping from each of said one or more images (V(I1),V(I2),... V(In)) captured in said step a), one or more image portions (V(I1)(P1),...V(I1)(Pn),....V(I2)(P1),....,V(I2)(Pn),....,V(In)(P1),...,V(In)(Pn)) at said at least one damage (D);
e) extracting, by means of a third neural network (R3), a numerical vector model (V(F)) of said at least one damage from said one or more image portions (V(I1)(P1),...V(I1)(Pn),....V(I2)(P1),....V(I2)(Pn),....,V(In)(P1),...,V(In)(Pn)) analyzed during said step d);

wherein, before said steps a) to e) and for each vehicle of said plurality of crashed vehicles (V1,V2,...Vn), the following steps are carried out:
a') capturing one or more digital images (V1(I1),V1(I2),...V1 (In); V2(I1),V2(I2),...V2(In);....; Vn(I1),Vn(I2),...Vn(In)) of said crashed vehicle (V1,V2,...Vn) at said damage (D1, D2,..., Dn);
b') analyzing, by means of said first neural network (R1) used in said step b), one or more captured digital images (V1(I1),V1(I2),...V1(In); V2(I1),V2(I2),...V2(In);,....; Vn(I1),Vn(I2),...Vn(In)) to identify and classify the mechanical spare part (PM1,PM2,...,PMn) of said vehicle in which there is said at least one damage (D1,D2,...,Dn);
c') analyzing, by means of said second neural network (R2) used in said step c), one or more captured digital images (V1(I1),V1(I2),...V1(In); V2(I1),V2(I2), ... V2(In);....; Vn(I1),Vn(I2),...Vn(In)) to identify and classify the type of damage (DT1,DT2,...,DT100) of said vehicle;
d') cropping, from each of said one or more digital images captured in said step a), one or more image portions ((V1(I1)(P1),...V1(I1)(Pn),....V1(I2)(P1),....,V1(I2)(Pn),....V1(In)(P1),...,V1(In)(Pn)); (V2(I1)(P1),...V2(I1)(Pn),....V2(I2)(P1),....,V2(I2)(Pn),....V(2In)(P1),...,V2(In)(Pn)); (Vn(I1)(P1),...Vn(I1)(Pn),....Vn(I2)(P1),....,Vn(I2)(Pn),....Vn(In)(P1),...,Vn(In)(Pn))) at said at least one damage (D1,D2,...,Dn);
e') extracting, by means of said third neural network (R3) used in said step e), a numerical vector model (V1(F1),V2(F2), ...Vn(Fn)) of said at least one damage from said one or more image portions analyzed during said step d');

said method further comprising the steps of:
f) for each vehicle of said plurality of crashed vehicles (V1, V2,... Vn), storing the results of said steps b'), c') and e') in a database (DB);
g) comparing the results which have been identified during said steps b), c) and e) for said first crashed vehicle with the results which have been identified during said steps b'), c') and e') for each vehicle of said plurality of vehicles and which are contained in said database (DB), to verify whether the damage (D) caused to said vehicle (V) corresponds to the damage (D1,D2,...,D100) caused to one of the vehicles of said plurality of vehicles (V1,V2,...,V100).

## Description

### Technical field of the invention

Object of the invention is a method for verifying whether the damage present in a first crashed vehicle is already present in a plurality of crashed vehicles.

In particular, this method can be used to prevent fraud against vehicle insurance companies.

### Known prior art

It is well known that insurance companies are victims of fraud committed by individuals or criminal organizations and that such fraud not only causes direct damage to the insurance company that suffers the fraud but also indirectly causes damage to all drivers who, on the other hand, while behaving in an exemplary manner, will have to pay higher insurance premiums precisely because of such fraud. The illegal activity under consideration deserves, therefore, special attention in that it generates annual claims for damages of several million euros, which consequently lead to a significant increase in premiums for motor vehicle liability insurance, and which in essence causes real economic and social damage: both to the community, due to the aforementioned increase in premiums, and to the country's image. There are several types of fraud that can be committed by these criminal organizations or individual citizens.

Among the various types of illegal activity that have emerged over time in the motor vehicle insurance sector, one that is particularly significant given its frequency and the high financial rewards involved, is the simulation of accidents that have never occurred or the aggravation of damage to a vehicle that has actually been involved in an accident, by using damaged parts assembled specifically for that purpose.

For example, damage caused to certain spare parts of a vehicle can be used several times for different claims for damages against different insurance companies.

For example, a single damage caused intentionally by the owner of a vehicle to a part of the vehicle itself, such as, for example, the bumper or hood of the vehicle, may be used to claim compensation from the insurance company even more than once.

Moreover, one or more damaged parts of a first vehicle, typically the front or side car body (since it is bolted and easier to disassemble), for which a first insurance compensation has already been obtained, can even be assembled on a second similar vehicle, so that the owner of this second vehicle can in turn claim a second compensation for the same damage.

In particular, the fraudster uses means that do not belong to him. First, the owner of the vehicle used in the simulation is immediately offered generous financial compensation. Secondly, the fraudster will contact a second party, who will be given the task of removing intact spare parts from the vehicle and replacing them with damaged ones, for a financial reward.

Subsequently, a claim for compensation will be submitted to the insurance company, setting out the circumstances that justify the damage to the purposely constructed vehicle.

The claim will never be made by the fraudster, who will never personally appear in the simulated accident, but by a fraudulent third party.

The peculiarity of this fraud is that it is not only particularly lucrative, but also inherently complex to identify, since the damaged parts are used countless times on different vehicles, since the individuals involved are always different and since the vehicles subjected to disassembly and reassembly only have the damaged parts in common, whereas the number plates and VINs (chassis numbers) are completely different.

In order to avoid being identified, it is also possible that within an already reported damage, e.g., a dent, an additional dent may be caused in order to slightly change the shape of the initial damage and not allow identification of the same damaged spare part that has already been used on different vehicles for different accidents, so as to obtain additional compensation.

Fraudsters, moreover, may even go so far as to repaint a damaged spare part in order to be able to reassembly it to another vehicle of the same used color and file a new claim for damages.

Therefore, object of the present invention is to implement a method of preventing insurance companies from being subject to such types of fraud, thereby increasing the ability of insurance companies to recognize damage that has already occurred.

Finally, object of the present invention is to implement a method enabling possible insurance fraud to be quickly and reliably recognized.

### Summary of the invention

The above mentioned objects are achieved by a method for verifying whether the damage present in a first crashed vehicle is already present in a plurality of crashed vehicles according to claim 1. In particular, said method comprises the steps of:
a) capturing one or more digital images of said first crashed vehicle at said damage;
b) analyzing said one or more captured digital images to identify and classify, by means of a first neural network, the mechanical spare part of said first vehicle in which there is said at least one damage;
d) analyzing said one or more captured digital images to identify and classify the type of damage by means of a second neural network;
c) cropping from each of said one or more images captured in said step a), one or more image portions at said at least one damage;
e) extracting, by means of a third neural network, a numerical vector model of said at least one damage from said one or more image portions analyzed during said step c);
wherein, before said steps a) to e) and for each vehicle of said plurality of crashed vehicles, the following steps are carried out:
a') capturing one or more digital images of said crashed vehicle at said damage;
b') analyzing, by means of said first neural network used in said step b), one or more captured digital images to identify and classify the mechanical spare part of said vehicle in which there is said at least one damage;
c') analyzing, by means of said second neural network used in said step c), said one or more captured digital images to identify and classify the type of damage;
d') cropping from each of said one or more images captured in said step a), one or more image portions at said at least one damage;
e') extracting, by means of said third neural network used in said step e), a numerical vector model of said at least one damage from said one or more image portions analyzed during said step c');
said method further comprising the steps of:
f) for each vehicle of said plurality of vehicles, storing the results of said steps b'), c') and e') in a database;
g) comparing the results which have been identified during said steps b), c) and e) for said first crashed vehicle with the results which have been identified during said steps b'), c') and
e') for each vehicle of said plurality of vehicles, and which are contained in said database, to verify whether the damage caused to said vehicle corresponds to the damage caused to one of the vehicles of said plurality of vehicles.

Thanks to this solution, it will be possible to verify, in extremely reliable way, whether the damage ascertained in a first vehicle has already been found in another vehicle in a database that has already been created specifically with vehicles previously subject to steps a) to e). Furthermore, step h) of geometrically locating the position of said at least one damage on the mechanical spare part of said first vehicle in which said at least one damage is present, is included after said step e), and wherein step h') of geometrically locating the position of said at least one damage on the mechanical spare of each vehicle of said plurality of vehicles, is included after said step e') and before said steps a) to e). Advantageously, the results of said step h') are stored in said database. Said step g) comprises the further step g1) of comparing the results identified during said step h) for said first crashed vehicle with the results identified during said step h') for each vehicle of said plurality of vehicles and stored in said database.

In practice, this step g1) is an additional verification to those carried out by comparing the results of steps b), c) and e) with steps b'), c') and e'). This drastically reduces the possibility of an error in the verification process, since, in addition to the comparisons previously carried out, there is an additional comparison that makes it possible to determine whether, in relation to the same mechanical part, the damage caused to the vehicle is in the same position as the damage caused to one of the plurality of vehicles already present in the database.

Again, the method comprises the step i) of acquiring, for said first vehicle, additional data selected from brand, model, year and color, and, after said step a') and before said steps a) to e), the step i') of acquiring, for each vehicle of said plurality of vehicles, additional data chosen from brand, model, year and color is included. The results of said step i') are stored in said database. This step g) comprises the further step g2) of comparing the results identified during said step i) for said first crashed vehicle with the results identified during said step i') for each vehicle of said plurality of vehicles and stored in said database.

As in the previous case, step g2) is an additional verification with respect to those carried out by comparing the results of steps b), c) and e) with steps b'), c') and e') and, possibly, between steps h) and h'). This way, the possibility of an error in the verification is reduced even more because, in addition to the comparisons previously made, there is an additional comparison by which it is possible to determine whether the data about the car that suffered the damage also match those of the cars in the database.

In detail, said mechanical spare part classified in said steps b) and b') is selected from front bumper, wheel, rear bumper, hood, rear boot, vehicle side part, rearview mirrors, windshield, lights/indicators, for cars, fairings, top box, instrument panel, windshield, accessories, etc., for motorcycles/mopeds, and frame, wheels, seat, handlebars, gearbox, etc.. for velocipedes.

The classification carried out in these steps b) and b') is done by means of a first neural network, properly trained.

Specifically, this first neural network was trained using a technique called "transfer learning". In practice, the first neural network was initialized with a generic, publicly available model of various objects to be recognized and, then, trained with private pictures in which the mechanical spare parts of the vehicle to be recognized were manually highlighted. Furthermore, said damage type classified in said step c) and c') is selected from scratch, dent, piece-crack, glass-crack and broken-light, said classification being carried out by means of a second neural network, properly trained.

This second neural network was trained using the same technique as the first neural network mentioned above.

Moreover, said step b) and said step b') comprise step b1) and step b1'), respectively, of geometrically delimiting said mechanical spare part to be detected by means of a first closed polygonal line through a process of digitally segmenting the mechanical spare part, and step b2) and step b2'), respectively, of recognizing the mechanical spare part by means of the aforementioned second neural network specially trained to perform that recognition, by using said first closed polygonal line as input data.

In addition, said step c) and said step c') comprise step c1) and step c1'), respectively, of geometrically delimiting said damage to be detected by means of a second closed polygonal line through a process of digitally segmenting the damage.

Advantageously, steps c) and c') comprise steps c2) and c2'), respectively, of recognizing the damage by means of the aforementioned second neural network specially trained to carry out this recognition.

According to an embodiment of the invention, said step e) and said step e') are carried out by means of said third neural network specially trained to carry out this recognition.

In addition, said third neural network used in said steps e) and e') is trained using the contrastive learning technique starting from said one or more images captured during said steps a) and a').

Still according to the invention, said step h) and said step h') comprise the step of locating the coordinates of said second closed polygonal line with respect to said first closed polygonal line, wherein the origin of the reference is preferably fixed at the lowest left point of said first closed polygonal line.

Again, according to a further preferred non-limiting embodiment, after said step e), the method comprises the step k) of analyzing at least one image of said one or more captured digital images to identify and classify, by means of a fourth neural network, the three-dimensional characteristics of said first vehicle at said damage, the step k1) of identifying the three-dimensional Cartesian coordinates of the geometric center of said damage from said three-dimensional characteristics of said first crashed vehicle, and the step k2) of calculating one or more geometric characteristics of the volume in which said damage is circumscribed and whose center is said geometric center, and wherein, after said step e') and before said steps a) to e), the method further comprises, for each vehicle of said plurality of crashed vehicles, the step k') of analyzing at least one image of said one or more captured digital images to identify and classify, by means of a fourth neural network, the three-dimensional characteristics of each vehicle at said damage, the step k1') of locating the three-dimensional Cartesian coordinates of the geometric center of said damage from said three-dimensional characteristics of each vehicle, and the step k2') of calculating one or more geometric characteristics of the volume in which said damage is circumscribed and whose center is said geometric center;
the results of said step k2') being stored in said database; said step g) comprising the further step g3) of intersecting said sphere identified during said step k2) for said first crashed vehicle with the sphere obtained in said step k2') for each vehicle of said plurality of vehicles.

According to a particular aspect, said fourth neural network is trained to determine the matrix of rotation-translation characteristics between the camera from which said at least one image was taken and the surface of said first vehicle at said damage, wherein said steps k) and k') each preferably comprise the step of removing the background from said at least one image to be analyzed.

Furthermore, said steps k1) and k1') respectively comprise the step of calculating the geometric center of the rectangle which circumscribes said second polygonal line determined in said steps c) and c') and the step of converting, by means of the ray-casting technique and the rotation-translation matrix determined during said steps k) and k'), the two-dimensional coordinates of said geometric center and of the vertices of said rectangle which circumscribes said second polygonal line into three-dimensional Cartesian coordinates.

According to a preferred non-limiting aspect, in said step k2), said volume is a sphere or a cube in which said damage is circumscribed, and said one or more geometric characteristics comprise the radius R(D) or a semi-diagonal, and in said step k2'), said volume is a sphere or a cube in which said damage is circumscribed and said one or more geometric characteristics comprise the radius or a semi-diagonal.

Again, said steps k2) and k2') respectively comprise the step of calculating the distance between the three-dimensional Cartesian coordinates of said geometric center and the three-dimensional Cartesian coordinates of said vertices of said rectangle circumscribing said second polygonal line, the maximum distance between said calculated distances corresponding to the radius of said sphere having, as its center, the three-dimensional Cartesian coordinates of said geometric center of said rectangle, or the maximum distance of said calculated distances corresponding to the semi-diagonal of said cube having, as its center, the three-dimensional Cartesian coordinates of said geometric center.

Finally, during said step g), the comparison between the results of said step e) for said first vehicle and said step e') for each vehicle of said plurality of vehicles is carried out by minimizing the distance between the numerical vector model of said at least one damage of said first vehicle and the numerical vector model of the damage of each vehicle of said plurality of crashed vehicles.

Furthermore, said step a) of capturing one or more digital images of said first crashed vehicle at said damage, and said step a') of capturing, for each vehicle of said plurality of crashed vehicles, one or more digital images of said crashed vehicle at said damage, comprise the step a0) and a0'), respectively, of processing said one or more images in such a way as to anonymize them. Herein and hereafter, "anonymize" will mean the digital operation which allows sensitive data to be removed, such as, for example, license plate numbers or other information that could lead to the identification of the vehicle owner by those who run into digital images of photographed vehicles.

Finally, if the damage caused to said vehicle does not correspond to any damage caused to said one or more vehicles, the results obtained during said steps b), c) and e), and possibly said step h) and/or said step i) and/or said step k2), are stored in said database.

### Brief description of the figures

Reference will be made to the figures in the attached drawings, in which:
- Figure 1 schematically shows the steps of the verifying method which are applied to the first vehicle;
- Figure 2 schematically shows the steps of the verifying method which are applied to the plurality of vehicles in a database with which the first vehicle is compared;
- Figure 3 schematically shows the steps k) to k2) of the method which are applied, for simplicity, to the first vehicle only.

### Detailed description of preferred embodiments

Various embodiments and variants of the invention will be described hereunder, and this with reference to the figures set forth above.

The method, which is object of the present invention, makes it possible to verify whether the damage D present in a first crashed vehicle V is already present in a plurality of crashed vehicles V1, V2,..., Vn. In the present embodiment, the number of the plurality of crashed vehicles with respect to which the verification is to be made is one hundred, i.e., V1, V2,..V100, however, in other embodiments, this number may also be of a smaller number of cars, such as, for example, ten, or higher, e.g., one million, or an unspecified number Vn, without thereby departing from the protection scope of the present invention. Clearly, the greater the number of cars in the plurality of cars V1, V2,..Vn with respect to which the comparison is to be made, the greater the possibility of detecting the presence of any car that has identical damage and, therefore, an attempt to defraud the insurance company, by means of the method that is object of the present invention.

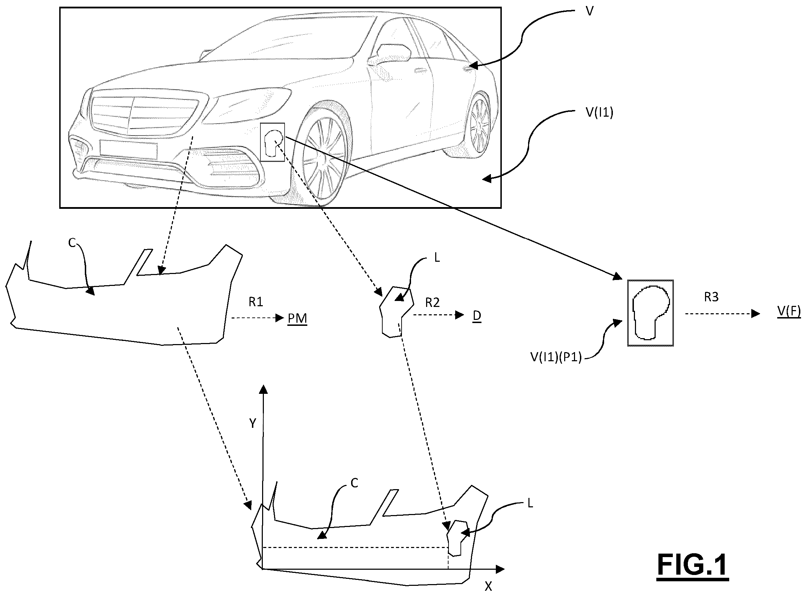

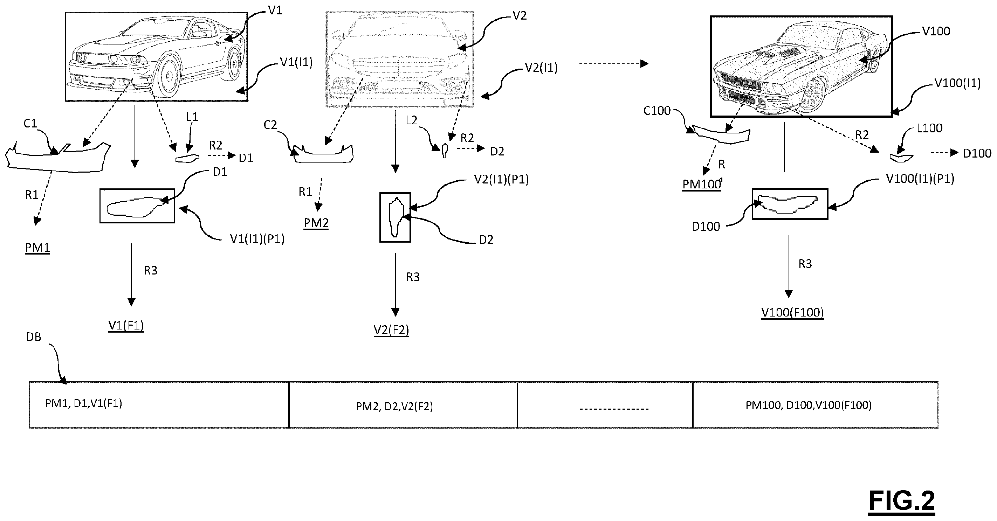

With particular reference to Figures 1 and 2, this method comprises the steps of:
a) capturing a digital image V(I1) of the first crashed vehicle V at the damage D;
b) analyzing this captured digital images V(I1) to identify and classify, by means of a first neural network R1, the mechanical spare part PM of the first vehicle V in which there is the damage D;
c) analyzing this captured digital image V(I1) to identify and classify, by means of a second neural network R2, the type of damage DT;
d) cropping, from each of the images captured during step a), an image portion V(I1)(P1) at the damage D;
e) extracting, by a third neural network R3, a numerical vector model V(F) of the damage D from the image portion V(I1)(P1) analyzed during step d).

It should be noted that, although in the embodiment described herein only one image V(I1) of the first vehicle V at the damage D was captured during step a) and only one image portion V(I1) (P1) was cropped during step d), nevertheless, in other embodiments, the number of captured images V(I1),V(I2),..,V(In) and the number of cropped image portions V((I1)(P1),...V(I1)(Pn),....V(I2)(P1),....,V(I2)(Pn),.... V(In)(P1),.., V(In)(Pn) for each image V(I1),V(I2),..,V(In) can be far more than one, without departing from the protection scope of the present invention.

In particular, the orientation from which the damage D is taken for each captured image V(I1), V(I2),..V(In) can also be defined, in order to then increase the reliability of the subsequent analyses carried out. For example, the angle, with respect to the front or lateral or rear side of the vehicle, from which the picture is taken can be mentioned.

Before said steps a) to e) and for each vehicle of the plurality of crashed vehicles V1, V2,..., V100, the following steps are carried out:
a') capturing a digital image V1(I1), V2(I1),..V100(I1) at the damage D1, D2,.., D100 for each vehicle V1, V2,.., V100 of the plurality of vehicles;
b') analyzing the captured digital image V1(I1), V2(I1),.., V100(I1), by means of the same first neural network R1 used in step b), to identify and classify the mechanical spare part PM1, PM2,.., PM100 of the vehicle in which the respective damage D1, D2,.., D100 is present;
c') analyzing, by means of the same second R2 neural network used in step d) to identify and classify the type of damage DT1, DT2,.., DT100;
d') cropping, from each image captured in said step a'), an image portion V1(I1)(P1), V2(I1)(P1),..,V100(I1)(P1), at the respective damage D1,D2,..D100;
e') extracting, by the third neural network R3 used during step e), a numerical vector model V1(F1), V2(F2),...., V100(F100) of the damage D1,D2,...,D100 from the image portion V1(I1)(P1), V2(I1)(P1),...,V100(I1)(P1) analyzed during step d').

It should be noted that, for the sake of simplicity, all vehicles of the plurality of vehicles V1, V2,.., V100 mentioned herein have been considered as having only one captured image and only one cropped image portion, however, the number of images per vehicle as well as the number of image portions to be cropped could be different without departing from the protection scope of the present invention. For example, the vehicle V1 might have two different images taken at damage D1, i.e., V1(I1), V1(I2), and for each image only one portion might be cropped, thus, V1(I1)(P1) and V1(I2)(P1), respectively, while for the second car V2 five images V2(I1),V2(I2),V2(I3),V2(I4),V2(I5) might be taken and for each image two portions V1(II)(P1), V1(I1)(P2), V1(I2)(P1), V1(I2)(P2), V2(I1)(P1),V2(I1)(P2), V2(I2)(P 1),V2(I2)(P2), V3(I1)(P1),V3(I1)(P2), V3(I2)(P1),V3(I2)(P2), V4(I1)(P1),V4(I1)(P2), V4(I2)(P1),V4(I2)(P2) V5(I1)(P1),V5(I1)(P2), V5(I2)(P1),V5(I2)(P2) might be cropped, without thereby departing from the protection scope of the present invention.

In general, therefore, the reference for an indefinite number of captured images will be as follows (V1(I1),V1(I2),...V1(In); V2(I1),V2(I2),...V2(In);,....; Vn(I1),Vn(I2),...Vn(In)), while the reference for an indefinite number of portions per image will be as follows ((V1(I1)(P1),...V1(I1)(Pn),....V1(I2)(P1),....,V1(I2)(Pn),.... V1(In)(P1),...,V1(In)(Pn)), (V2(I1)(P1),...V2(I1)(Pn),....V2(I2)(P1),....,V2(I2)(Pn),.... V(2In)(P1),...,V2(In)(Pn)); (Vn(I1)(P1),...Vn(I1)(Pn),....Vn(I2)(P1),....,Vn(I2)(Pn),....Vn(In)(P1),...,Vn(In)(Pn))). Furthermore, it should also be noted that, for ease of explanation, the mechanical spare part PM of the first crashed vehicle V that contains the damage D is the front bumper of the vehicle, as well as for all the examples illustrated in Figure 2 in relation to the vehicles of the plurality of vehicles V1,V2,..V100, on the other hand, the mechanical spare part PM1,PM2,..,PM100 that has a damage D1,D2,..,D100 may also be different for the vehicles of the plurality of vehicles V1,V2,..,V100, without thereby departing from the protection scope of the present invention.

According to a preferred aspect of the method, the step a) of capturing one or more digital images of the first crashed vehicle V at the damage D and the step a') of capturing, for each vehicle of the plurality of crashed vehicles V1, V2,.., Vn, one or more digital images V1(I1), V2(I1),..V100(I1) of the crashed vehicle at the corresponding damage D1,D2,..D100, respectively comprise the steps a0) and a0') of processing these one or more images so as to anonymize them, i.e., cancel from these images sensitive data such as, for example, the license plate or any other reference that may lead to the identification of the owner.

Furthermore, according to the method, the steps d) and d') of cropping from each of the images captured during step a) an image portion V(I1)(P1) at the damage D, and cropping from each image captured in said step a') an image portion V1(I1)(P1), V2(I1)(P1),...,V100(I1)(P1) at the respective damage D1,D2,...D100, respectively, are carried out taking into account that this damage has been identified and classified during step c) and c') and that, therefore, the area of the image V(I1) and V1(I1),V2(I1),...,V100(I1) from which a portion is cropped is where the damage D and D1,D2,D100 is identified.

The method further comprises the steps of:
f) for each vehicle of the plurality of vehicles, storing the results of the aforementioned steps b'), c') and e') in a database DB; and
g) comparing the results which have been identified during steps b), c) and e) for the first crashed vehicle V with the results which have been identified during steps b'), c') and e') for each vehicle of the plurality of vehicles V1,V2,...V100 and which are contained in the database (DB), to verify whether the damage D caused to the vehicle V corresponds to the damage D1,D2,...,D100 caused to one of the vehicles of the plurality of vehicles V1,V2,...,V100.

If the results obtained for a vehicle V1 from the plurality of crashed vehicles V1, V2,.., V100 contained in the database DB are substantially the same as those obtained from the first crashed vehicle V during steps b), c), and e), then the damage D of the first vehicle is already present in the database DB. On the other hand, if the results for each vehicle of said plurality of crashed vehicles V1, V2,.., V100 in the database DB are different from those obtained from the first crashed vehicle V during steps b), c) and e), then the results of the first crashed vehicle V obtained during steps b), c) and e) are stored in the database.

In practice, the method allows the results obtained during steps b), c) and e) of the first vehicle V to be compared to the results obtained during steps b'), c') and e') carried out on each vehicle of the plurality of crashed vehicles V1, V2, V100 previously analyzed.

The comparison is made between the type of mechanical spare part PM identified for the first vehicle V and each mechanical spare part PM1,PM2,..,PM100 identified in the vehicles V1,V2,..,V100 which are in the database DB, between the type of damage DT identified for the first vehicle V and the type of damage DT1,DT2,..,DT100 identified in the vehicles V1,V2,..,V100 which are in the database DB, and between the numerical model V(F) representative of the damage D emerging from the analysis carried out for the first vehicle V and the numerical vector model V1(F1), V2(F2),..,V100(F100) identified in the vehicles V1,V2,..,V100 which are in the database DB. It should be noted that, both for the first vehicle V and for the vehicles V1, V2,.., V100 which are already in the database, this vector model does not have a physical nature but is a numerical sequence representative of the way the third neural network R3 used represents that particular vehicle damage.

If the results of the above three comparisons are basically congruent then it means that the damage D caused to the first vehicle V is already present in the database DB, i.e., there is already a vehicle contained in the database BD with an identical damage.

Therefore, in this case, among the plurality of vehicles, the images of the vehicle for which the result of the comparisons is substantially congruent are extracted from the database DB, thus also allowing those images to be viewed and data for that vehicle to be retrieved.

According a further embodiment of the invention, step h) of geometrically locating the position of the damage D on the mechanical spare part PM of the first vehicle V in which there is the damage D, is included after step e). In addition, step h') of geometrically locating, for each vehicle of the plurality of vehicles V1, V2,..V100, the position of the damage D1, D2,.., D100 on the mechanical spare part PM1, PM2,.., PM100 of each vehicle of the plurality of vehicles V1, V2,.., V100, is included after step e') and before steps a) to e); the results of step h') are thus stored in the database DB. Furthermore, step g) comprises the further step g1) of comparing the results identified during step h) for the first crashed vehicle V with the results which, for each vehicle of the plurality of vehicles V1,V2,...,V100 contained in the database DB, are identified during step h').

In this case, if the results obtained during steps b'), c'), e') and h') for a vehicle of the plurality of crashed vehicles V1, V2,.., V100 contained in the database DB are substantially the same as those obtained during steps b), c), e) and h) from the first crashed vehicle V, then the damage D present in the first vehicle V is already present in the database DB. On the other hand, if the results for each vehicle of said plurality of crashed vehicles V1, V2,.., V100 which are in the database DB are different from those obtained during steps b), c), e) and h) from the first crashed vehicle V, then the results of the first vehicle V obtained precisely during steps b), c), e) ed h) are further stored in the database DB.

This step h) is shown schematically only in Figure 1, while Figure 2, for simplicity, does not show, even schematically, step h') during which the position of the damage D1, D2, .., D100 with respect to the identified mechanical spare part PM1, PM2, .., PM100 is located for each vehicle of the plurality of vehicles V1, V2, .., V100 which are present in the database DB.

Thus, step g1) is an additional comparison step which allows the damage of the first vehicle to be recognized even more precisely with respect to the aforementioned plurality of vehicles D1, D2,..., Dn present in the database DB. In practice, further filtering takes place with respect to the one obtained from the comparison in step g) between the results obtained in steps b), c) and e) and those obtained, for each vehicle of the plurality of vehicles V1,V2,..,V100, in steps b'), c') and e'). This increases the reliability of the verifying method object of the invention.

Again, according to a further embodiment of the invention, the method comprises step i) of acquiring additional data selected from brand, model, year and color for the first vehicle V and, after said step a') and before said steps a) to e), step i') is included of acquiring additional data selected from brand, model, year and color for each vehicle of the plurality of vehicles V1, V2,..., V100. The results of said step i') are then stored in the database DB.

Step g) thus comprises the further step g2) of comparing the results identified during said step i) for the first crashed vehicle V with the results which, for each vehicle of the plurality of vehicles V1,V2,...,V100 contained in the database DB, are identified during said step i').

In this case, if the results obtained during steps b'), c'), e') and i') for a vehicle of the plurality of crashed vehicles V1, V2,.., V100 contained in the database DB are substantially the same as those obtained during steps b), c), e) and i) from the first crashed vehicle V, then the damage D present in the first vehicle V is already present in the database DB. On the other hand, if the results for each vehicle of said plurality of crashed vehicles V1, V2,.., V100 which are in the database DB are different from those obtained during steps b), c), e) and i) from the first crashed vehicle V, then the results of the first vehicle V obtained precisely during steps b), c), e) and i) are further stored in the database DB.

These steps i) and i') have not been graphically illustrated in the two Figures 1 and 2.

Thus, step g2), like step g1), is an additional comparison step which allows the recognition of the damage D of the first crashed vehicle V to be even more precise with respect to the aforementioned plurality of vehicles V1, V2,..., V100 present in the database DB. In practice, further filtering takes place with respect to the one obtained from the comparison in step g) between the results obtained in steps b), c) and e) and those obtained, for each vehicle of the plurality of vehicles V1, V2,..., Vn, in steps b'), c') and e'). This step g2) can take place in combination with step g1) or even separately therefrom.

This step g2) can also take place before step g1) or even directly before the comparison of the results of steps b), c) and e) with the results of steps b), c) and e) for each crashed vehicle present in the database DB.

Finally, therefore, if the damage D caused to the vehicle V does not correspond to any damage D1,D2,...,D100 caused to said one or more vehicles V1,V2,...,V100, the results obtained during steps b), c) and e) and possibly steps h) and/or i), are stored in said database DB.

More specifically, steps b) and b') comprise step b1) and step b1'), respectively, of geometrically delimiting the respective mechanical spare part PM and PM1,PM2,....PM100 to be detected by means of a first closed polygonal line C and C1,C2,...,C100, through a process of digitally segmenting the image where there is this mechanical spare part PM and PM1,PM2,....PM100, and step b2) and step b2'), respectively, of recognizing the mechanical spare part PM and PM1,PM2,....PM100 by means of the first neural network R1 specially trained to perform that recognition, by using the aforementioned first closed polygonal line C and C1,C2,...,C100 as input data.

According to the invention, the mechanical spare part PM, PM1,PM2,PM100 classified in said steps b) and b') is selected from front bumper, wheel, rear bumper, hood, rear boot, vehicle side part, rearview mirrors, windshield, lights/indicators, for cars, and fairings, top box, instrument panel, windshield, accessories, etc., for motorcycles/mopeds, and frame, wheels, seat, handlebars, gearbox, etc.. for velocipedes. The classification is carried out in said steps b) and b') by means of the aforementioned first neural network R1 properly trained. In practice, the first neural network R1 used for carrying out steps b1), b2) and b1') and b2') is able to carry out what is called in the literature by the English term "instance segmentation," that is, the identification of objects (in this case the vehicle parts) by polygons which are described by coordinates expressed in pixels, starting from the initial digital image. A technique called "transfer learning" can be used to train the first neural network R1. In this case, the first neural network R1 was initialized with a generic, publicly available model and, then, trained with private pictures in which the parts of the vehicle to be recognized were manually highlighted. The machine learning framework used in this step is called "detectron2" (https://github.com/facebookresearch/detectron2) developed by Facebook, available under Apache-license 2.0.

Again, the type of damage DT,DT1,DT2,..,DT100 classified in steps d) and d') is selected from scratch, dent, piece-crack, glass-crack and broken-light. This classification is made by means of the second neural network R2 properly trained.

In this case too, steps c) and c') respectively comprise step c1) and step c1') of geometrically delimiting the damage D and D1, D2,..., D100 to be detected by means of a second closed polygonal line L and L1, L2,...,L100 through a process of digitally segmenting the damage.

Furthermore, steps c) and c') respectively further comprise steps c2) and c2') of recognizing the damage D and D1,D2,...,D100 by the second neural network R2 specially trained to carry out this recognition. This analysis is carried out on the initially acquired image.

In practice, similarly to the first neural network R1, the second neural network R2 as well, used for carrying out steps c1') and c2'), is able to accomplish what is called in the literature by the English term "instance segmentation", that is, the identification of objects (in this case the type of damage caused to the vehicle) by polygons described by coordinates expressed in pixels and obtained from the initial image. A technique called "transfer learning" was used to train the second neural network R2. In this case, the second neural network R2 was initialized with a generic, publicly available model and, then, trained with private pictures in which the types of damage of the vehicle to be recognized were manually highlighted. The machine learning framework used in this step is called "detectron2" (https://github.com/facebookresearch/detectron2) developed by Facebook, available under Apache-license 2.0.

As can be understood, therefore, steps b), b') and c), c') are substantially similar, however, the type of "request", i.e. the element to be recognized that correspond, in this particular cases, to the spare part and the damage, is different.

Additionally, step e) and step e') are carried out by the aforementioned third neural network R3 specially trained to perform this recognition, by using the portion of the image cropped from the initial image.

In particular, the third neural network R3 used in steps e) and e') is trained by the contrastive learning technique.

Specifically, a numerical vector model of the damage V(F) and V1(F1),V2(F2),..,V100(F100) is extracted by taking the cropped portion of image in which the damage D,D1,D2,..,D100 identified in step c) and c') appears, and by extracting the "characteristics" of that portion of image by means of the aforementioned third neural network R3. In the example described herein, the third neural network R3 is called "ResNet". The latter is a neural network architecture widely recognized and used in the world of "machine learning" and is usually used as a "building block" through which more complex architectures are built. Indeed, in order to make the "ResNet" suitable for obtaining the desired results, an architecture called SimCLR (https://arxiv.org/abs/2002.05709) was implemented that exploits the technique of contrastive learning. Unlike "detectron2," which needs manually recorded data to be trained, "SimCLR" is able to estimate the numerical vector model of damage by comparing the input image with a version thereof deterministically transformed by rotations, distortions and colorations. This process of training with data not recorded by the user is called by the English name "unsupervised learning".

During step g) the comparison between the results of step e) for the first vehicle V and the results of step e') for each vehicle of said plurality of vehicles V1,V2,...,Vn is carried out by minimizing the distance between the numerical vector model V(F) of the damage of the first vehicle V and the numerical vector model V1(F1),V2(F2),..., V100(F100) of the damage of each vehicle of said plurality of crashed vehicles V1,V2,...,Vn.

The final result of this comparison will make it possible to verify whether the damage D is identical to the damage D1, D2, ..., D100 present in one of the vehicles contained in the database DB.

Moreover, step h) and step h') comprise the step of locating the coordinates of the second closed polygonal line L and L1, L2,...,L100 with respect to the first closed polygonal line C and C1, C2,...,C100 with which the second closed polygonal line is associated, wherein the origin of the reference is preferably fixed at the lowest left point of the first closed polygonal line C and C1,C2,...,C100. The second polygonal line L, L1, L2,..,L100 is superimposed on the corresponding first polygonal line C, C1, C2,..,C100 in such a way as to determine the exact position of the damage D,D1,D2,..,D100 with respect to the mechanical spare part PM,PM1,PM2,..,PM100 in which there is that damage.

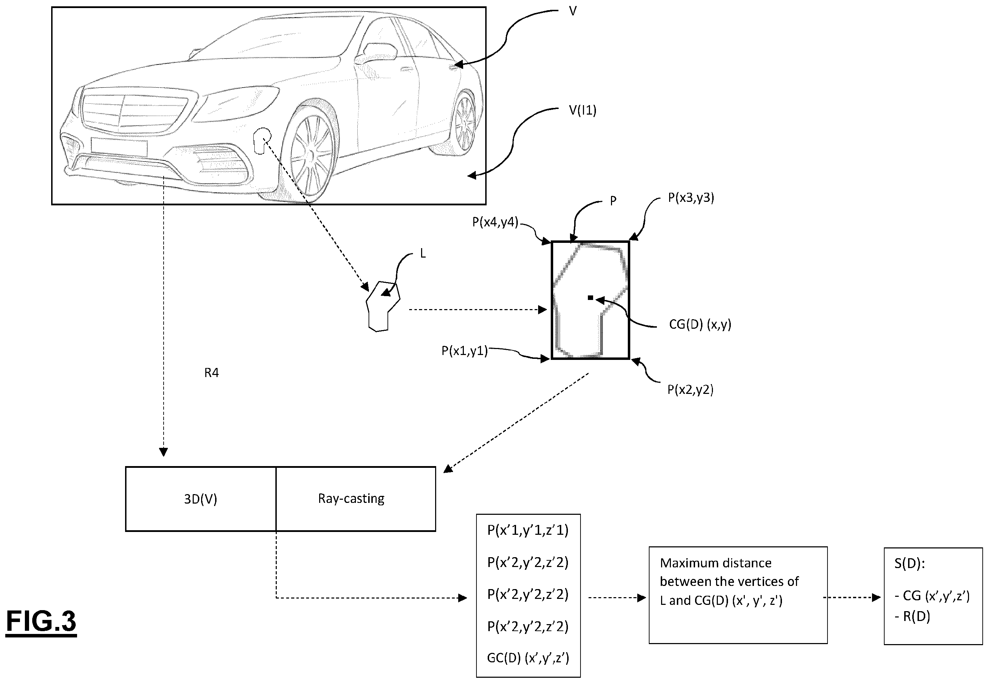

According to a further embodiment of the invention shown in a highly simplified manner in Figure 3, after step e), the method comprises the step k) of analyzing at least one image of the captured digital images V(I1), V(I2), .. V(I100) (in the example only the image V(I1)) to identify and classify, by means of a fourth neural network R4, the three-dimensional characteristics 3D(V) of the first vehicle V at the damage D, the step k1) of locating the three-dimensional Cartesian coordinates CG(D)(x', y', z') of the three-dimensional geometric center CG(D) of the damage D from the three-dimensional characteristics 3D(V) of the first crashed vehicle V and the step k2) of calculating the radius R(D) of the sphere S(D) in which the damage D is circumscribed and whose center is the geometric center CG(D). The method further comprises, after step e') and before steps a) to e), and for each vehicle of the plurality of vehicles V1, V2, .. V100, the step k') of analyzing at least one image of the captured digital images V1(I1), V1(I2), .. V1(I100); V2(I1), V2(I2), ..V2(I100);..; V100(I1),V100(I2),..V100(In) to identify and classify, by means of the aforementioned fourth neural network R4, the three-dimensional characteristics 3D(V1),3D(V2),..,3D(V100) of each vehicle at the respective damage D1,D2,.,Dn, the step k1') of locating the three-dimensional Cartesian coordinates CG (D1)(x',y',z'), CG(D2)(x',y',z')),.., CG(D100)(x',y',z') of the three-dimensional geometric center CG(D1), CG(D2),...,CG(D100) of the damage D1,D2,...,D100 from the three-dimensional characteristics 3D(V1),3D(V2),....,3D(V100) of each vehicle and the step k2') of calculating the radius R(D1),R(D2),...,R(D100) of the sphere S(D1),S(D2),...,S(D100) in which the damage is circumscribed and whose center is the respective geometric center CG(D1),CG(D2,... CG(D100). According to the method, the results of step k2') are stored in the database DB; in addition, step g) comprises the additional step g3) of intersecting the sphere S(D) identified during step k2) for the first crashed vehicle V with the sphere S(D1),S(D2),..,S(D100) obtained in step k2') for each vehicle of the plurality of vehicles. If the intersection of the sphere S(D) identified in step k2) for the first crashed vehicle V with each sphere S(D1),S(D2,..,S(D100) obtained in step k2') for each vehicle of the plurality of vehicles is zero, then the damage D of the first vehicle V is distinct from the damage of each vehicle of the plurality of vehicles V1,V2,..,V100, otherwise a match in the database DB is reported of a car that has damage potentially identical to that of the first car V.

It should be noted that, in the embodiment described herein, the radius of the sphere that circumscribes the damage both of the first vehicle and the vehicles of the plurality of vehicles is calculated in step k2) and k2'), in any case, more generally, a different geometric shape capable of circumscribing the damage can also be used, such as, for example, the cube or another one, even more complex. In the case of the cube, for example, the geometric characteristic to be identified may be the semi-diagonal.

In other embodiments, the geometric shape may also be a parallelepiped or another one, even more complex. In these cases, of course, there are more than one geometric characteristics of the volume which circumscribe the damage in order to characterize it appropriately.

In detail, the fourth neural network R4 used in steps k) and k') is of the pre-trained backbone type and designed to estimate the rotation-translation matrix 6DOF between the camera and the vehicle surface at the damage.

The network is structured as follows.

A convolutional backbone extracts features of interest from the blocked-out image of the vehicle. These features are then processed by three main components:
an "attention encoder", which analyzes the contextual relationships between features and captures their relevant spatial dependencies;
a "positional encoder", which incorporates information about the spatial location of the features, making the model aware of their location within the image;
an "attention decoder", which merges signals from the attention encoder and the positional encoder, creating a global and structured representation of the scene.

The decoder output is finally sent to two specialized heads:
- a translation head, which estimates the translation of the camera; and
- a rotation head, which estimates its spatial orientation, returning the rotation in a "quaternion" or angular matrix format. Such a fourth neural network R4 is, therefore, trained to determine the matrix of rotation-translation characteristics between the camera which captured the analyzed image and the surface of the first vehicle V (or the vehicles of the plurality of vehicles) at the damage D (or the damages D1, D2,..,D100 of the vehicles in the database DB). In addition, steps k) and k') preferably comprise the step of removing the background from the image to be analyzed. In practice, the image is blocked out so that only the car V is visible.

The rotation-translation matrix is also known by the name "six degrees of freedom" matrix or also by the acronym matrix "6DOF". As will be seen more fully below, this rotation-translation matrix makes it possible to determine the rotation-translation undergone by each point on the surface of the car so that this point can be represented on a two-dimensional image. Therefore, such a matrix 6DOF makes it possible to find, inversely, the three-dimensional Cartesian coordinates of a point on the surface of the car, starting from a point on the two-dimensional image of the vehicle V.

In addition, the steps k1) and k1') respectively comprise the step of calculating the geometric center CG(D) of the rectangle P and P1, P2, ..., P100 which circumscribes the second polygonal line L and L1, L2, ..., L100 determined in steps c) and c') and of the vertices of the rectangle P and P1, P2, ..., P100, and the step of converting, by means of the ray-casting technique and the rotation-translation matrix determined during steps k) and k'), the two-dimensional coordinates of the geometric center CG(D)(x,y), CG(D1) (x,y), CG(D2) (x,y),...,CG(D100) (x,y) and of the vertices of the rectangle P and P1,P2,...,P100 which circumscribes the second polygonal line, into three-dimensional Cartesian coordinates CG(D)(x',y',z'), P(x'1,y'1, z'1), P(x'2,y'2,z'2), P(x'3,y'3,z'3) e P(x'4,y'4,z'4), CG(D1)(x',y',z'), P1(x'1,y'1, z'1), P1(x'2,y'2,z'2), P1(x'3,y'3,z'3), P1(x'4,y'4,z'4), CG(D2)(x',y',z'), P2(x'1,y'1, z'1), P2(x'2,y'2,z'2), P2(x'3,y'3,z'3), P2(x'4,y'4,z'4),...,CG(D100)(x',y',z'), P100(x'1,y'1,z'1), P100(x'2,y'2,z'2), P100(x'3,y'3,z'3), P100(x'4,y'4,z'4), respectively.

The calculation of the geometric center CG(D), CG(D1), CG(D2),..,CG(D100) of the rectangle P, P1, P2,.., P100 can be done simply by identifying the intersection of the two diagonals of the rectangle P,P1,P2,..,P100 itself, starting from the two-dimensional coordinates of the four vertices.

In Figure 3, for the sake of simplicity, only the two-dimensional coordinates of the four vertices of the rectangle P which circumscribes the second polygonal L have been depicted, namely P(x1,y1), P(x2,y2), P(x3,y3) and P(x4,y4).

This ray-casting technique is well known to the field technician. In practice, for each two-dimensional point on the image, expressed in pixel coordinates, a ray is constructed in three-dimensional space that starts from the optical center of the camera and passes through that point in the image plane. This is possible because of the camera's intrinsic matrix (which defines the perspective projection model) and the rotation-translation matrix obtained by means of the fourth neural network R4, which allows us to correctly orient the camera in the three-dimensional world.

To obtain the actual three-dimensional position of each point, assuming that the damage D is located on a vehicle surface (e.g. an estimated flat or curved surface), the point of intersection between the radius and that vehicle surface where the damage D is located, is calculated. This process allows each two-dimensional point to be converted into a specific three-dimensional point in real space.

Finally, said steps k2) and k2') respectively comprise the step of calculating the distance between the three-dimensional Cartesian coordinates of the geometric center CG(D), CG(D1), CG(D2),., CG(D100) and the three-dimensional Cartesian coordinates of the vertices of the aforementioned rectangle P,P1,P2,..., P100 that circumscribes the aforementioned second polygonal line L and L1, L2,..., L100; the maximum distance among the distances calculated above corresponds to the radius of the sphere S(D) and S(D1), S(D2),.,S(D100) having, as center, the three-dimensional Cartesian coordinates of the geometric center CG(D) and CG(D1) CG(D2),..., CG(D100) of the rectangle.

In the case that the volume S(D) and S(D1), S(D2),., S(D100) circumscribing the damage D, D1, D2,.., D100 is a cube, then the maximum distance among the calculated distances corresponds to the semi-diagonal of the cube having as center the three-dimensional Cartesian coordinates of the geometric center of the rectangle.

In this case, if the results obtained during steps b'), c'), e') and k2') for a vehicle of the plurality of crashed vehicles V1, V2,.., V100 contained in the database DB are substantially the same as those obtained during steps b), c), e) and k2) from the first crashed vehicle V, then the damage D present in the first vehicle V is already present in the database DB.

These steps k) and k') have not been graphically illustrated in the two Figures 1 and 2.

Thus, step g3), like step g1) or g2), is an additional comparison step which allows the recognition of the damage D of the first crashed vehicle V to be even more precise with respect to the aforementioned plurality of vehicles V1, V2,..., V100 present in the database DB. In practice, further filtering takes place with respect to the one obtained from the comparison in step g) between the results obtained in steps b), c) and e) and those obtained, for each vehicle of the plurality of vehicles V1, V2,..., Vn, in steps b'), c') and e'). This step g3) can take place in combination with step g1) or g2) or even separately therefrom.

This step g3) can also take place before step g1) or g2), even directly before the comparison of the results of steps b), c) and e) with the results of steps b), c) and e) for each crashed vehicle in the database DB.

This step allows the damage to be located within a part of the vehicle in order to expand the pool of information about it. The location of the damage within the mechanical spare part is then estimated in terms of the coordinates relating to it.

In practice, the subsequent comparison during step g1) makes it possible to verify whether the damage located in a particular mechanical spare part of the first vehicle is also detectable in at least one of the vehicles of the plurality of vehicles in an identical location with respect to an identical mechanical spare part.

In the embodiment described herein, the damage D of the first vehicle V will result as already present in the database DB. In particular, in the vehicle V2, although it was photographed only from the front, thus at a different angle than the one from which the first vehicle V was photographed, there is the damage D2 that is substantially identical to the damage D of the first car. In this case, all material related to the vehicle V2 is read out from the database DB and forwarded to the insurance company where the damage settlement procedure was filed.

In the event that the comparison performed during step g) of the method did not result in any match between damage in the first vehicle and damage in any of the vehicles in the database, then the results obtained during steps b), c) and d), and possibly step h) and/or step i) and/or step k2), are stored in the database DB.

## Claims

1. Method for verifying whether the damage (D) present in a first crashed vehicle (V) is already present in a plurality of crashed vehicles (V1, V2,... Vn), said method comprising the steps of:
a) capturing one or more digital images (V(I1), V(I2),... V(In)) of said first crashed vehicle (V) at said damage (D);
b) analyzing said one or more captured digital images (V(I1),V(I2),... V(In)) to identify and classify, by means of a first neural network (R1), the mechanical spare part (PM) of said first vehicle (V) in which there is said at least one damage (D);
c) analyzing said one or more captured digital images (V(I1),V(I2),..V(In)) to identify and classify, by means of a second neural network (R2), the type of damage (DT) present in said first vehicle (V);
d) cropping from each of said one or more images (V(I1),V(I2),...V(In)) captured in said step a), one or more image portions (V(I1)(P1),...V(I1)(Pn),....V(I2)(P1),....,V(I2)(Pn),....V(In)(P1),...,V(In)(Pn)) at said at least one damage (D);
e) extracting, by means of a third neural network (R3), a numerical vector model (V(F)) of said at least one damage from said one or more image portions (V(I1)(P1),...V(I1)(Pn),....V(I2)(P1),....,V(I2)(Pn),....V(In)(P1),...,V(In)(Pn)) analyzed during said step d);
wherein, before said steps a) to e) and for each vehicle of said plurality of crashed vehicles (V1,V2,...Vn), the following steps are carried out:
a') capturing one or more digital images (V1(I1),V1(I2),...V1 (In); V2(I1),V2(I2),...V2(In);....; Vn(I1),Vn(I2),...Vn(In)) of said crashed vehicle (V1,V2,...Vn) at said damage (D1, D2,..., Dn);
b') analyzing, by means of said first neural network (R1) used in said step b), one or more captured digital images (V1(I1),V1(I2),...V1(In); V2(I1),V2(I2),...V2(In);,....; Vn(I1),Vn(I2),...Vn(In)) to identify and classify the mechanical spare part (PM1,PM2,...,PMn) of said vehicle in which there is said at least one damage (D1,D2,...,Dn);
c') analyzing, by means of said second neural network (R2) used in said step c), one or more captured digital images (V1(I1),V1(I2),...V1(In); V2(I1),V2(I2),...V2(In);....; Vn(I1),Vn(I2),...Vn(In)) to identify and classify the type of damage (DT1,DT2,...,DT100) of said vehicle;
d') cropping, from each of said one or more digital images captured in said step a), one or more image portions ((V1(I1)(P1),...V1(I1)(Pn),....V1(I2)(P1),....,V1(I2)(Pn),....V1(In)(P1),...,V1(In)(Pn)); (V2(I1)(P1),...V2(I1)(Pn),....V2(I2)(P1),....,V2(I2)(Pn),....V(2In)(P1),...,V2(In)(Pn)); (Vn(I1)(P1),...Vn(I1)(Pn),....Vn(12)(P1),....,Vn(I2)(Pn),....Vn(In)(P1),...,Vn(In)(Pn))) at said at least one damage (D1,D2,...,Dn);
e') extracting, by means of said third neural network (R3) used in said step e), a numerical vector model (V1(F1),V2(F2), ...Vn(Fn)) of said at least one damage from said one or more image portions analyzed during said step d');
said method further comprising the steps of:
f) for each vehicle of said plurality of crashed vehicles (V1, V2,... Vn), storing the results of said steps b'), c') and e') in a database (DB);
g) comparing the results which have been identified during said steps b), c) and e) for said first crashed vehicle with the results which have been identified during said steps b'), c') and
e') for each vehicle of said plurality of vehicles and which are contained in said database (DB), to verify whether the damage (D) caused to said vehicle (V) corresponds to the damage (D1,D2,...,D100) caused to one of the vehicles of said plurality of vehicles (V1,V2,...,V100).

2. Verifying method according to claim 1, wherein step h) of geometrically locating the position of said at least one damage on the mechanical spare part of said first vehicle in which said at least one damage is present, is included after said step e), and wherein step h') of geometrically locating the position of said at least one damage on the mechanical spare part of each vehicle of said plurality of vehicles, is included after said step e') and before said steps a) to e); the results of said step h') being stored in said database; said step g) comprising the further step g1) of comparing the results identified during said step h) for said first crashed vehicle with the results which have been identified during said step h') for each vehicle of said plurality of vehicles, the results being contained in said database.

3. Verifying method according to one or more of claims 1 to 2, comprising step i) of acquiring, for said first vehicle, further data selected from brand, model, year and color, and, after said step a') and before said steps a) to e), step i') of acquiring, for each vehicle of said plurality of vehicles, further data selected from brand, model, year and color, is included; the results of said step i') being stored in said database; said step g) comprising the further step g2) of comparing the results which have been identified during said step i) for said first crashed vehicle with the results which have been identified during said step i') for each vehicle of said plurality of crashed vehicles, the results being contained in said database.

4. Verifying method according to one or more of claims 1 to 3, wherein said mechanical spare part classified in said step b) and b') is selected from front bumper, rear bumper, hood, rear boot, one of the two or four doors of the vehicle and roof, for cars, fairings, top box, instrument panel, windshield and accessories, for motorcycles/mopeds, frame, wheels, seat, handlebars and gearbox, for velocipedes, said classification being carried out by means of said first neural network (R1), properly trained.

5. Verifying method according to one or more of claims 1 to 4, wherein said damage type (DT;DT1,DT2,DT100) classified in said step c) and c') is selected from scratch, dent, piece-crack, glass-crack and broken-light, said classification being carried out by means of said second neural network, properly trained.

6. Verifying method according to one or more of claims 1 to 5, wherein said step b) and said step b') comprise step b1) and step b1'), respectively, of geometrically delimiting said mechanical spare part to be detected by means of a first closed polygonal line (C; C1, C2,...,C100) by a process of digitally segmenting the mechanical spare part, and step b2) and step b2'), respectively, of recognizing the mechanical spare part by means of said first neural network (R1) specially trained to perform that recognition, by using said first closed polygonal line as input data.

7. Verifying method according to one or more of claims 1 to 6, wherein said step c) and said step c') comprise step c1) and step c1'), respectively, of geometrically delimiting said damage to be detected by means of a second closed polygonal line (L; L1, L2,...,L100) by a digital segmentation process of the damage.

8. Verifying method according to claim 7, wherein said steps c) and c') further comprise step c2) and step c2'), respectively, of recognizing the type of damage (DT;DT1,DT2,...,D100) by means of said second neural network (R2) specially trained to perform said recognition, by using as input data said second closed polygonal line (C1,C2,... Cn) obtained during said steps c1 and c1').

9. Verifying method according to one or more of claims 1 to 8, wherein said step e) and said step e') are carried out by means of said third neural network (R3) specially trained to perform this recognition, said third neural network (R3) used in said steps e) and e') being preferably trained by the contrastive learning technique.

10. Verifying method according to at least claims 2, 6 and 7, wherein said step h) and said step h') comprise the step of locating the coordinates of said second closed polygonal line (L;L1,L2,...,L100) with respect to said first closed polygonal line (C;C1,C2,...,C100), wherein, preferably, the origin of the reference is fixed at the lowest left point of said first closed polygonal line.

11. Verifying method according to one or more of claims 1 to 10, **characterized in that**, after said step e), the method comprises the step k) of analyzing at least one image of said one or more captured digital images (V(I1), V(I2), .. V(In)) to identify and classify, by means of a fourth neural network (R4), the three-dimensional characteristics (3D(V)) of said first vehicle (V) at said damage (D), the step k1) of locating the three-dimensional Cartesian coordinates (CG(D)(x',y',z')) of the geometric center (CG(D)) of said damage (D) from said three-dimensional characteristics (3D(V)) of said first crashed vehicle (V) and the step k2) of calculating one or more geometric characteristics (R(D)) of the volume (S(D)) in which said damage (D) is circumscribed and whose center is said geometric center (CG(D)), and wherein, after said step e') and before said steps a) to e), the method further comprises, for each vehicle of said plurality of vehicles, the step k') of analyzing at least one image of said one or more captured digital images (V1(I1), V1(I2),.. V1(In); V2(I1), V2(I2),.. V2(In); ..; Vn(I1), Vn(I2),.. Vn(In)) to identify and classify, by means of a fourth neural network (R4), the three-dimensional characteristics (3D(V1), 3D(V2), ...,3D(Vn)) of each vehicle at said damage (D1, D2, ., Dn), the step k1') of locating the three-dimensional Cartesian coordinates (CG(D1) (x', y', z'), 3DC(D2) (x',y',z'),.., 3DC(Dn) (x',y',z')) of the geometric center (CG(D1), CG(D2),...,CG(Dn)) of said damage (D1,D2,...,Dn) from said three-dimensional characteristics (3D(V1),3D(V2),....,3D(Vn))) of each vehicle and the step k2') of calculating one or more of the geometric characteristics of the volume (S(D1),S(D2,..,S(D3)) in which said damage is circumscribed and whose center is said geometric center (CG(D1),CG(D2,..CG(Dn)), the results of said step k2') being stored in said database; said step g) comprising the further step g3) of intersecting said volume (S(D)), identified during said step k2) for said first crashed vehicle (V), with the volume obtained in said step k2') for each vehicle of said plurality of vehicles.

12. Method according to claim 11, **characterized in that** said fourth neural network (R4) is trained to determine the matrix of rotation-translation characteristics between the camera from which said at least one image was taken and the surface of said first vehicle at said damage (D), said steps k) and k') preferably comprising the step of removing the background from said at least one image to be analyzed.

13. Method according to claims 7 and 12, **characterized in that** said steps k1) and k1') respectively comprise the step of calculating the geometric center of the rectangle (P; P1, P2,..., Pn) which circumscribes said second polygonal line (L; L1, L2, ..., L100) determined in said steps c) and c') of the vertices of said rectangle (P and P1, P2, ..., P100), and the step of converting, by means of the ray-casting technique and the rotation-translation matrix determined during said steps k) and k'), the two-dimensional coordinates of said geometric center (CG(D)(x,y), CG(D1) (x,y), CG(D2) (x,y),...,CG(Dn) (x,y)) and of the vertices of said rectangle which circumscribes said second polygonal line into three-dimensional Cartesian coordinates (CG(D)(x',y',z'), P(x'1,y'1, z'1), P(x'2,y'2,z'2), P(x'3,y'3,z'3) e P(x'4,y'4,z'4), CG(D1)(x',y',z'), P1(x'1,y'1, z'1), P1(x'2,y'2,z'2), P1(x'3,y'3,z'3), P1(x'4,y'4,z'4), CG(D2)(x',y',z'), P2(x'1,y'1, z'1), P2(x'2,y'2,z'2), P2(x'3,y'3,z'3), P2(x'4,y'4,z'4),..., CG(Dn)(x',y',z'), Pn(x'1,y'1, z'1), Pn(x'2,y'2,z'2), Pn(x'3,y'3,z'3), Pn(x'4,y'4,z'4)).

14. Method according to one or more of claims 11 to 13, **characterized in that**, in said step k2), said volume (S(D)) is a sphere or a cube in which said damage (D) is circumscribed, and said one or more geometric characteristics comprise the radius R(D) of said sphere or a semi-diagonal of said cube, and **in that**, in said step k2'), said volume (S(D1), S(D2), .., S(D3)) is a sphere or a cube in which said damage (D1, D2, .. Dn) is circumscribed and said one or more geometric characteristics comprise the radius (R(D1), R(D2), .. R(Dn)) of said sphere or a semi-diagonal of said cube.

15. Method according to claim 14, **characterized in that** said steps k2) and k2') respectively comprise the step of calculating the distance between the three-dimensional Cartesian coordinates of said geometric center and the three-dimensional Cartesian coordinates of said vertices of said rectangle circumscribing said second polygonal line, the maximum distance between said calculated distances corresponding to the radius of said sphere having as its center the three-dimensional Cartesian coordinates of said geometric center of said rectangle, or the maximum distance of said calculated distances corresponding to the semi-diagonal of said cube having as its center the three-dimensional Cartesian coordinates of said geometric center of said rectangle.

16. Verifying method according to one or more of claims 1 to 15, wherein during said step g), the comparison between the results of said step e) for said first vehicle (V) and of said step e') for each vehicle of said plurality of vehicles (V1,V2,...,V100) is carried out by minimizing the distance between the numerical vector model (VF) of said at least one damage (D) of said first vehicle (V) and the numerical vector model (V1(F1),V2(F2),..., V100(F100)) of the damage (D1,D2,...,D100) of each vehicle of said plurality of crashed vehicles (V1,V2,...,V100).

17. Verifying method according to one or more of claims 1 to 16, wherein if the damage (D) caused to said vehicle (V) does not correspond to any damage caused to any vehicle of said plurality of vehicles (V1,V2,...,V100), the results obtained during said steps b), c) and e), and possibly said step h) and/or said step i) and/or said step k2), are stored in said database (DB).
